# EUROPEAN PATENT APPLICATION

(11) **EP 3 073 720 A1**
(43) Date of publication of application: **28.09.2016**
(21) Application number: 15000863.9
(22) Date of filing: 24.03.2015
(51) Int. Cl.: H04M 3/436

(54) **Method and device, system and software product for managing a call**

(71) Applicant: Unify GmbH & Co. KG, 81379 München (DE)
(72) Inventor: Giatilis, Vasileios, 17561 Palaio Faliro (GR); Georgiou, Dimitrios, 15231 Chalandri (GR)
(74) Representative: Fritzsche, Thomas

(57) **Abstract**

One aspect of the invention is a method for managing a call, including steps of:
• recognizing a call request (111) of a calling party (10) to establish a call with a called party (20), and
• extending a timeout being a time period between recognizing the call request (111) and automatically rejecting the call by the called party (20) before the call is established or rejected.

Further aspects are a telecommunication device and a telecommunication system for managing a call, and a respective software product. The invention provides a ringing time extension which gives the called party more time to establish an incoming call.

## Description

The present invention relates to a method of managing call. The invention also relates to a corresponding device, system, and software product.

Nearly all telephone providers have timeout periods in which call connections are released if the called endpoint has not answered the call. Many users however experience missed calls because of different reasons such as:
- they have lost time to identify whom the calling number belongs to, which city the number is from, or the like, or
- the phone rings and they cannot answer at this right instance but they want just a bit more time in order to find another place to accept the call, e.g., get out of a meeting room, their supervisor's office or a bus.

Up to now techniques such as call busy on reject call, or reject call via an SMS 'call you later' are available in which the called user has to make the callback to the originator giving him the responsibility to initiate the communication or even worse the blame that he or she was not available at the time of the call. It is also known in the art that a call is accepted but the caller is asked to wait a little bit. This method has a drawback in that the caller has to wait until the called person returns to the call while a communication line is open which may cause charges to occur.

An object of the present invention is to provide a method, a device, a system, and a software product for managing a call, in particular a voice call such as a telephone call, which is able to at least partly alleviate the drawbacks of the prior art as mentioned above. In particular, an object of the present invention is to provide such a method, device, system, and software product which provides the opportunity to the user to handle an incoming call flexibly in order to make communication more adjustable to real use cases.

The aforementioned object or objects of the invention is/are solved at least in parts by the features of the independent claims. Advantageous embodiments and further developments of the invention are set forth in the sub-claims.

One aspect of the invention is a method for managing a call, comprising steps of:
- recognizing a call request of a calling party to establish a call with a called party, and
- extending a timeout being a time period between recognizing the call and automatically rejecting the call by the called party, before the call is established or rejected.

In other words, the method of this aspect of the invention provides a ringing time extension which gives the called party more time to establish an incoming call. It will be noted that a call may preferably include a telephone call, but should generally be understood to cover any voice telecommunication standard. It will further be noted that recognizing the call includes receiving the call at the called party's terminal device. However, generally speaking, recognizing the call in the sense of the invention may be accomplished at any instance in the communication path.

In a preferred embodiment of this aspect, the step of extending the timeout comprises:
- setting a ringing timer to a timeout initial value upon recognizing said call request, said timeout initial value defining a ringing time before said call request is automatically rejected, and
- resetting said ringing timer to a timeout reset value, before said ringing timer runs out.

The ringing timer may be a form of said extended timeout. Setting and resetting the initial value and the reset value may be defined such that the timer is running up from zero to an end value (reject value) or down from a maximum time to zero.

In this embodiment, said timeout reset value may be identical with said timeout initial value, or may be different from said timeout initial value, preferably definable by said called party beforehand and/or upon receiving said call request. The first alternative may be the standard (default) case. The second alternative allows a user to individually set the ringing duration (i.e., said time period or timeout).

In a preferred embodiment of this aspect, a step of receiving a demand from said called party to execute the step of extending said timeout is provided. Here, said step of extending said timeout may be executed upon receipt of said timeout extension demand.

Notifying may be accomplished by a message, light signal, vibration, and/or audio alarm. It alerts the called user to decide whether the ringing time extension should be demanded or not.

In a preferred embodiment of this aspect, a step of notifying said called party that said time period is up to end (i.e., said ringing timer is up to run out) is provided which may give the user better control of the ringing duration.

In a preferred embodiment of this aspect, said step of extending said timeout is automatically executed before said time period ends (i.e., the ringing timer runs out). This is alternative or optional to the previous embodiment and ascertains that ringing may be continued until the called party picks up or explicitly rejects the call, or the calling party terminates the request. Establishing may be by default or user selection. The latter is advantageous when a person knows that he or she will not be able to promptly recognize or accept a call in the next time.

In a preferred embodiment of this aspect, a step of notifying said calling party and/or said called party that said ringing timer has been reset is provided, preferably including a step of providing a message to a terminal device of the calling party to allow the called party to accept the call request during the extended timeout. Optionally, the notification may include the number of resets and/or the fact whether the reset has been executed automatically or manually. The message may be pre-defined by the employed standard, or may be default by the system, device, or provider, or may be settable by the user (i.e., called party). A suitable default message may be "don't hang up, be there in a second", as proposed in the invention disclosure. The message may be encoded by the calling party and decoded by the calling party.

In a preferred embodiment of this aspect, the method is implemented by using a SIP standard, preferably utilizing an INFO SIP request method for establishing and/or notifying extended timeout (i.e., reset ringing timer) at and to the calling party or an intermediate instance, respectively. In this context, "intermediate" is to be understood to define a location between the called and calling parties. In other words, if the ringing timer is executed at another instance than the called party itself, INFO SIP request may be used for triggering the ringing timer reset at said another instance. Optionally, an OPTIONS SIP request may be used to ascertain the capability of the another instance to execute the INFO SIP method itself, and to execute the extended ringing (i.e., ringing timer resetting) feature, beforehand. INFO SIP may also be used for notifying the calling party or intermediate instance of the ringing timer reset. These options may be mixed, e.g., the ringing timer reset (timeout extension) may be demanded by the called party, executed by an intermediate instance, and notified, by the called party or the intermediate instance, to the calling party. The intermediate party may be any SIP proxy between the calling and called parties, an ITSP, exchange, gateway, or whatsoever.

In a preferred alternative embodiment of this aspect, the method is implemented with a TDM signalling standard, wherein any request, notification and the like is accomplished by TDM encoded messages. Here, new information elements may be defined and/or negotiated beforehand. E.g., a new information element "IE_DHU" (Don't hang up) may be defined for notifying the calling party.

Another aspect of the invention is a telecommunication device which is adapted to execute the method of the previous aspect. Adaptation may be accomplished through programming (software) or fixture (hardware). As the device of this aspect is adapted to execute the method of the previous aspect, the device provides any advantage the method provides.

In preferred embodiments of this aspect, said telecommunication device is either an instance within a telecommunication system, said instance being arranged between said calling party and said called party, or a terminal device of the called party. Such instance may be any proxy, ITSP, exchange, gateway, etc. In the second option, all the method is executed within the terminal device (obviously, the called party). Except an optional notification/message to the calling party, this option is standard-independent as no further signalling is needed.

In a preferred embodiment of this aspect, said telecommunication device comprises a trigger element such as a button, key, switch, designated area on a touch panel or the like, adapted for demanding or initiating execution of said step of extending said timeout. This provision may be in particular useful for desktop telephone stations in that the user does not need to look on a display of a mobile set to handle the demand. In an alternative, the device may be adapted to recognize a voice command, e.g. "extend ringing" or the like, to be spoken by the called user, for demanding or initiating ringing timer resetting.

In a preferred embodiment of this aspect, said telecommunication device is adapted to run said ringing timer upon an outgoing and/or incoming and/or forwarded call request. Depending on the telecommunication system and/or standard and/or provider, ringing timer may be set and executed, and hence the timeout may be extended, in any of the terminal devices, at the provider itself, or a predefined or negotiated instance within the communication chain.

A further aspect of the present invention is a telecommunication system, comprising apparatus means for:
- recognizing a call request of a calling party to establish a call with a called party, and
- extending a timeout being a time period between recognizing the call and automatically rejecting the call by the called party, before the call is established or rejected.

Here, said telecommunication system is preferably adapted to execute the method of the first aspect. As the system of this aspect is adapted to execute the method of the first aspect, the system provides any advantage the method provides.

In a preferred embodiment of this aspect, the steps of the method are distributed to at least two instances of said telecommunication system, said instances including:
- at least one terminal device which is adapted to provide a demand for execution of said ringing timer resetting step, and
- at least one instance which is adapted to run a ringing timer and to accept said demand and to execute said ringing timer resetting step.

The at least two instances may include one or both of the terminal device and the at least one instance, or may include also other instances. The at least one terminal device may be the called party's terminal device. The at least one instance may be another terminal device which may be the calling party's terminal device.

A further aspect of the present invention is a software product for managing a call, said software product being stored on computer-readable medium, preferably being directly loadable into an internal memory of a computer, and comprising program code for performing the steps of a method of the first aspect when said software product is executed by said computer, said computer preferably comprising or being embodied by or included in a telephone, mobile phone, smart phone, PDA, server, preferably telephone server, exchange, gateway, ITSP, desktop computer, portable computer, tablet, or the like. It will be noted that the program code may be adapted to alter or extend call managing software existing on said computer. As the software product of this aspect comprising program code for performing the steps of the method of the first aspect, the device provides any advantage the method provides.

This invention describes a method of how to extend the ringing time on demand and/or notifying the caller to wait a bit more because user will eventually pick up the phone. The general method may be the same for a plurality of different technologies, while each one inherits this basic functionality and may extend it furthermore depending on the underlying protocols and functions.

The present invention therefore provides a functionality to provide 'on demand' request to extend the ringing and/or 'notifying' the caller to wait bit more. Thereby, the present invention enables telephone providers and/or programmers and/or manufacturers tp provide the opportunity to the users to handle the incoming call in a more flexible way in order to make communication more adjustable to real use cases.

The present invention may also be embodied by a computer program for managing a call, including instructions causing a computer to perform the steps of the afore-described method when said computer program is loaded in or executed by said computer, and by a digital data carrier having electrically readable control signals which are designed to operate with a programmable computer for managing a call, said control signals being designed and adapted to cause the computer to perform the steps of the afore-described method. Here, the computer may also be embodied by the device of the described aspect of the invention, a communication device, a server such as a collaboration server, call management server, conference server or the like, a personal computer or the like.

Further features, objects, advantages, and details of the present invention will become more apparent from the following description of specific embodiments of the invention and respective illustration in the appended drawings. Obviously, features, objects, advantages, and details of a specific embodiment, its variations and modifications mutatis mutandis apply to other embodiments, variations and modifications unless such application obviously violates technical constraints or laws of nature. Embodiments may be combined with each other, and any combination of an embodiment with another embodiment as a whole or in terms of single features thereof may be assumed to constitute an embodiment of the invention.

Next, the invention is described referring to specific embodiments and referring to the accompanying drawings wherein:
Fig. 1 is a conceptual message flow diagram illustrating a method according to a basic exemplary embodiment of the invention;
Figs. 2A, 2B are schematic diagrams depicting an interface for a mobile (smart) device according to an exemplary embodiment of the present invention;
Fig. 3 is a schematic diagram depicting a desk-set device according to a further exemplary embodiment of the present invention;
Figs. 4 and 5 are message flow diagrams illustrating the method implemented in a SIP environment according to a specific exemplary embodiment of the invention;
Fig. 6 is a message flow diagram illustrating the method implemented in a SIP environment according to a further specific exemplary embodiment of the present invention;
Fig. 7 is a message flow diagram showing a case if a transaction fails;
Fig. 8 is a message flow diagram depicting an implementation of the inventive method to a case where the called party is using a cellular phone or smartphone such as device, according to a further specific exemplary embodiment of the invention;
Fig. 9 is a message flow diagram depicting an implementation of the inventive method to TDM signalling in case of external incoming call, according to a further specific exemplary embodiment of the present invention; and
Figs. 10, 11 are message flow diagrams depicting an implementation of the inventive method to TDM signalling in case of internal incoming call, according to a further specific exemplary embodiment of the present invention.

Now, the invention will be described in detail in its preferred exemplary embodiments, referring to the accompanying drawings. It is to be noted however that the drawings are purely schematic and not necessarily to scale. The drawings and descriptions are to illustrate the principle underlying the invention, not to limit the same in any way. The present invention is only limited by the appended claims.

### <General Concept>

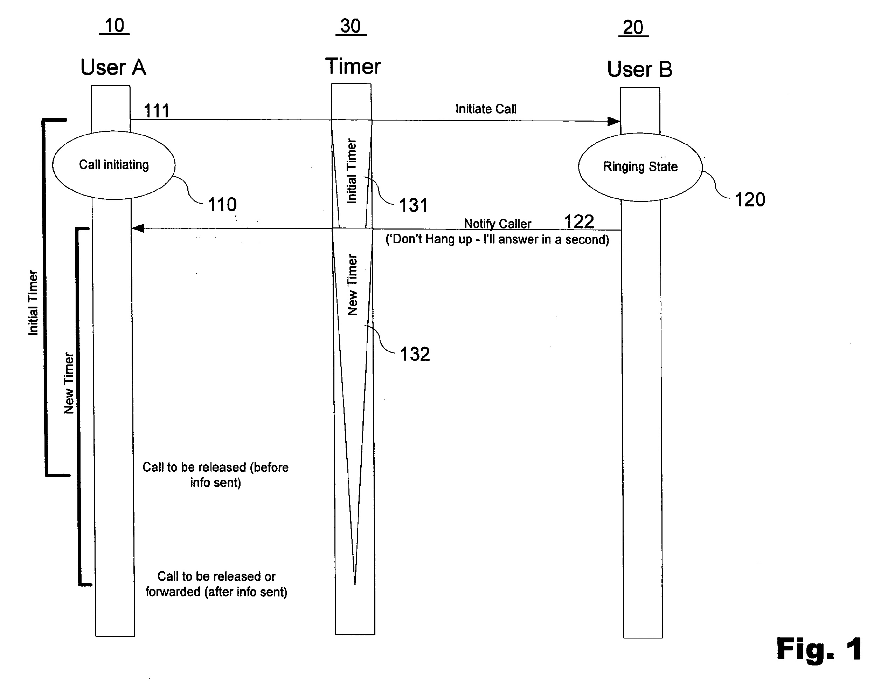

Fig. 1 is a conceptual message flow diagram illustrating a method according to a basic exemplary embodiment of the invention. The figure schematically shows basic logical instances, their states, events and procedural steps according to a general concept of the invention.

The method shown in Fig. 1 concerns a calling party 10, a called party 20, and a timer instance 30. Here, the calling party 10 is represented by a User A, and the called party 20 is represented by a User B. As shown in Fig. 1, as the calling party 10 initiates a call as represented by a call initiating state 110, a first message 111 including a call request is sent from the calling party 10 to the called party 20. The first message 111 induces a ringing state 120 to be established at the side of the called party 20. Furthermore, the first message 111 causes the timer instance 30 to set an initial ringing timer 131 to start. In other words, the ringing timer is set to a timeout initial value. It will be noted that any ringing timer set in timer instance 30 defines a predetermined time period between recognizing the call and automatically rejecting the call by the called party, i.e., a predetermined timeout, before the call is established or rejected In other words, if the ringing timer set in timer instance 30 ends, the call initiated by the calling party 10 would be released, resulting in the ringing state 120 being finished.

As shown in Fig. 1, before the initial timer 131 ends, the called party 20 sends a second message 122 to the calling party 10, including a notification "Don't hang up - I'll answer in a second". By the second message 122, the calling party 10 can be informed that the called party 20 has recognized the call request but for some reason is not in the position to accept the call at this very moment. Therefore, the called party may hope that the calling party 10 would not lose patience and would not hang up but wait until the call is answered. At the same time, the second message 122 causes the timer instance 30 to set a new ringing timer 132 to start. In other words, the ringing timer is set to a timeout reset value. The reset value may be identical with or different from the initial value. Thereby, the ringing state 120 is maintained, and the timeout extended.

Apparatuses on respective sides of the calling party 10, the called party 20, and the timer instance 30 cooperatively form a system for managing a call which per se is an embodiment of the invention. Any such apparatus in the system, as long as executing or configured to execute the method steps described before or in following exemplary embodiments, variations and modifications or equivalents, may be a device for managing a call, each of which per se is an embodiment of the invention. Any computer program such as an application, causing any of those apparatuses to execute steps of the aforementioned method or in following exemplary embodiments, variations and modifications or equivalents, or it's physical implementation such as a software product or data carrier, is an embodiment of the invention.

It will be noted that, as a general concept, the timer instance 30 may be located at any instance in the system. In other words, the timer instance 30 may be located in a device representing the calling party 10 or the called party 20, a server, exchange or provider instance assigned for the calling party 10 or the called party 20, or at any instance in a communications network the calling party 10 and the called party 20 are accessing to.

### <Exemplary Terminal Devices>

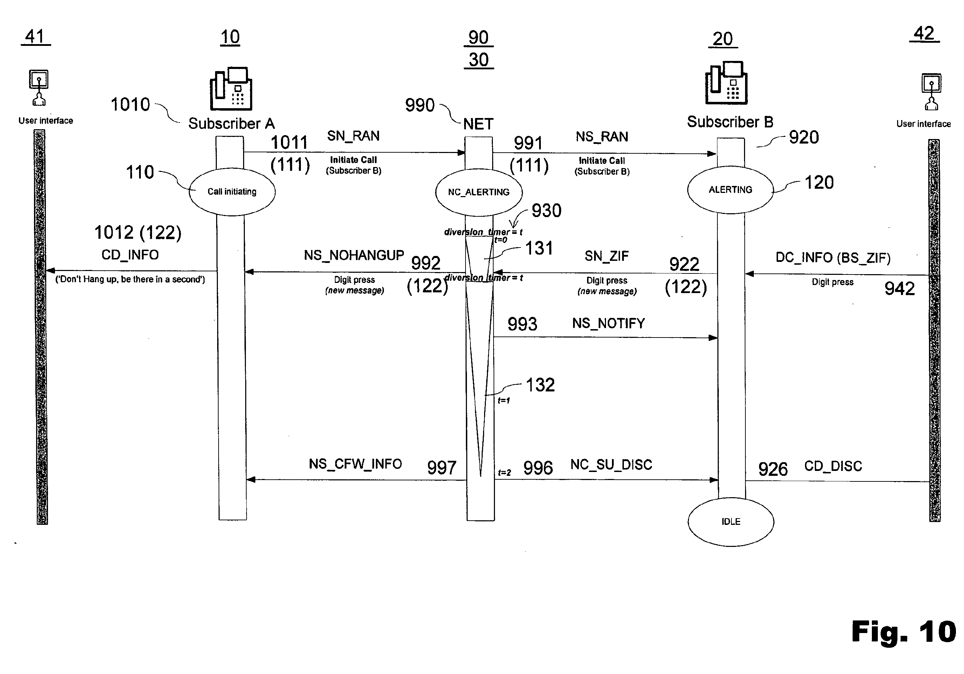

It is assumed that the method of the invention generally exemplified in Fig. 1 is executed on the sides of the calling party 10 and the called party 20 using some terminal device providing a user interface (UI) which may be referred to by reference number 40, in general, or 41 and 42, for calling party 10 and called party 20, respectively (e.g. Fig. 10).

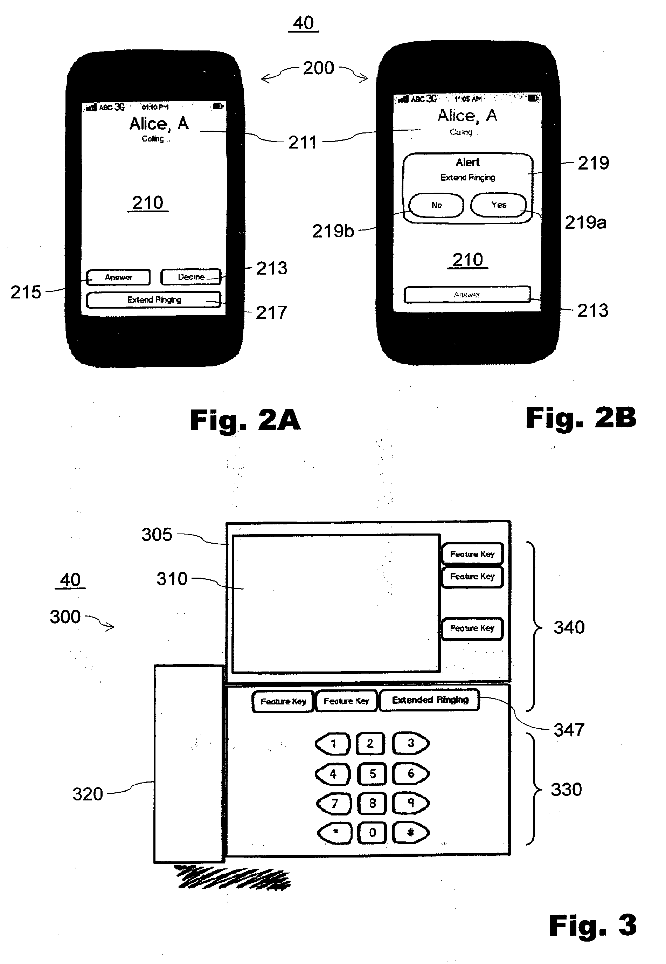

Examples of terminal devices assumed throughout the disclosure allowing the human user to trigger the initiation of the described feature, are shown in Figs. 2A, 2B, and 3. Herein, Figs. 2A, 2B depict an interface 40 for a mobile (smart) device 200, and Fig. 3 depicts an interface 40 represented by a desk-set device 300.

In Figs. 2A and 2B, a SIP telephone client is assumed running on a smart device 200 either as a native offering or as a third party application. The smart device 200 comprises a touchscreen 210 which is used as a user interface. The touchscreen 210 per se is known in the art so that description of a function and usage thereof will be omitted here. As shown in Fig. 2A, if a call request (e.g. first message 111 of Fig. 1) is received and recognized by the SIP telephone client running on smart device 200, an incoming call display prompt 211 indicating that a calling party (Bob, B in this example) is calling is displayed on touchscreen 210. As is generally known in the art, the user may also be alerted by a ringing sound and/or vibration alert. Furthermore, defined regions of touchscreen 210 are provided and activated to react on touch as input regions or virtual buttons 213, 215, 217. In particular, an Answer button 213 is provided to allow the user to answer the call, a Decline button 215 is provided to allow the user to decline the call, and, as a feature of the present invention, an Extend Ringing button 217 is provided to allow the user to extend ringing time. By "pressing" the Extend Ringing button 217 (i.e., touching the respective active region on touchscreen 210), the ringing timer extension feature of the present invention is activated, i.e., a ringing timer (such as timer instance 30 of Fig. 1) is reset. This may be done by, e.g., sending a message (such as the second message 122 of Fig. 1) towards the calling side.

As shown in Fig. 2B, if a ringing timer is up to end, an Alert dialog box 219 is prompted on touchscreen 210 of smart device 200, alerting the user that ringing time is up to end. The Alert dialog box 219 has a Yes button 219a and a No button 219b. By pressing the Yes button 219a (i.e. touching the respective active region on touchscreen 210), the ringing timer is reset such as described above. By pressing the No button 219b, the Alert dialog box 219 vanishes, and the screen shown in Fig. 2A is again displayed on touchscreen 210 until the ringing timer runs out whereupon the call is automatically rejected. Even if the Answer button 213 is shown inactivated in Fig. 2B, it is possible to maintain the Answer button 213 activated to allow the user to answer the call without first responding to the Alert dialog box 219. Even if a Decline button is not shown in Fig. 2B, it is possible to provide a Decline button such as Decline button 213 of Fig. 2A inactivated for reference, or activated to allow the user to decline the call without first responding to the Alert dialog box 219.

In Fig. 3, a principle view of a desk-set device 300 is shown. Desk-set device 300 is a telephone device which is by hardware designed to provide a ringing time extension function. As shown in Fig. 3, the desk-set device 300 comprises a casing 305, a display screen 310, a handset 320, a numerical keypad 330, and a number of feature keys 340 one of which is defined as an Extended Ringing key 347. If a call request is received and recognized at desk-set device 300, a respective notice (not shown) will be displayed on display 310, a ringing tone will be produced, and a ringing timer will be initially set. If a ringing time is up to end, an alert message (not shown) may be prompted on display screen 310, alerting the user that ringing time is up to end. If during ringing the Extended Ringing key 347 is pressed by a user, the ringing timer is reset such as described above. If the Extended Ringing key 347 is not pressed and the call is not answered, the call will be automatically rejected when the ringing timer runs out.

It has to be noted that the devices 200, 300 shown in Figs. 2A, 2B, and 3 are only for the sake of example, and any type of device enabled for running a SIP or other suitable telephony application, for example a desktop PC, notebook, laptop, tablet, PDA or any other type known in the art or hereinafter developed, may be used as the communication terminal device.

### <Specific Implementations>

In the following, different implementations that the above schematic can find in different technologies, are described. These are: (1) Session Initiation Protocol (SIP [RFC3261]) VoIP telephony, and (2) Digital signalling. An example for each of those above is given based on the OpenScape Business family of products architecture.

### <SIP/VoIP Telephony>

An application of the present invention to Session Initiation Protocol (SIP [RFC3261]) VoIP telephony will now be described.

The Session Initiation Protocol (SIP) is a signalling communications protocol defined in various standards and recommendations, and is widely used for controlling multimedia communication sessions such as voice and video calls over Internet Protocol (IP) networks (VoIP). The protocol defines the messages that are sent between endpoints, which govern establishment, termination and other essential elements of a call. SIP can be used for creating, modifying and terminating sessions consisting of one or several media streams.

A SIP based communication system can comprise various components. Following is a short definition of some entities used throughout the present application:
- A SIP user agent (UA) is a logical network end-point (communication terminal) used to create or receive SIP messages and thereby manage a SIP session. A SIP UA can perform the role of a User Agent Client (UAC) which sends SIP requests, and a User Agent Server (UAS) which receives the requests and returns a SIP response. These roles of UAC and UAS only last for the duration of a SIP transaction. A SIP communication terminal is an IP phone that implements SIP user agent and server functions, which provide the traditional call functions of a telephone, such as dial, answer, reject, hold/un-hold, and call transfer. SIP phones may be implemented as a hardware device or as a software application client that can run in any type of device with relevant capabilities, for example a PC, a tablet, a Smartphone or a PDA etc.
- A proxy server is an intermediary entity that acts as both a server and a client for the purpose of making requests on behalf of other clients. A proxy server primarily plays the role of routing, meaning that its job is to ensure that a request is sent to another entity closer to the targeted user. Throughout this embodiment SIP proxy servers are assumed to function in a simplified stateless manner.
- An Internet telephony service provider (ITSP) offers digital telecommunications services based on Voice over Internet Protocol (VoIP) that are provisioned via the Internet. ITSPs provide services to end-users directly or as whole-sale suppliers to other ITSPs. ITSPs use a variety of signalling and multimedia protocols, including the Session Initiation Protocol (SIP).

The proposed implementation of the inventive method is based on the support of the INFO SIP request method by the communicating SIP entities (SIP-UA: User agent client, User Agent Server). SIP UA will have to use an OPTIONS SIP request method beforehand to query the server or another user agent about its capabilities and discover whether INFO support is available.

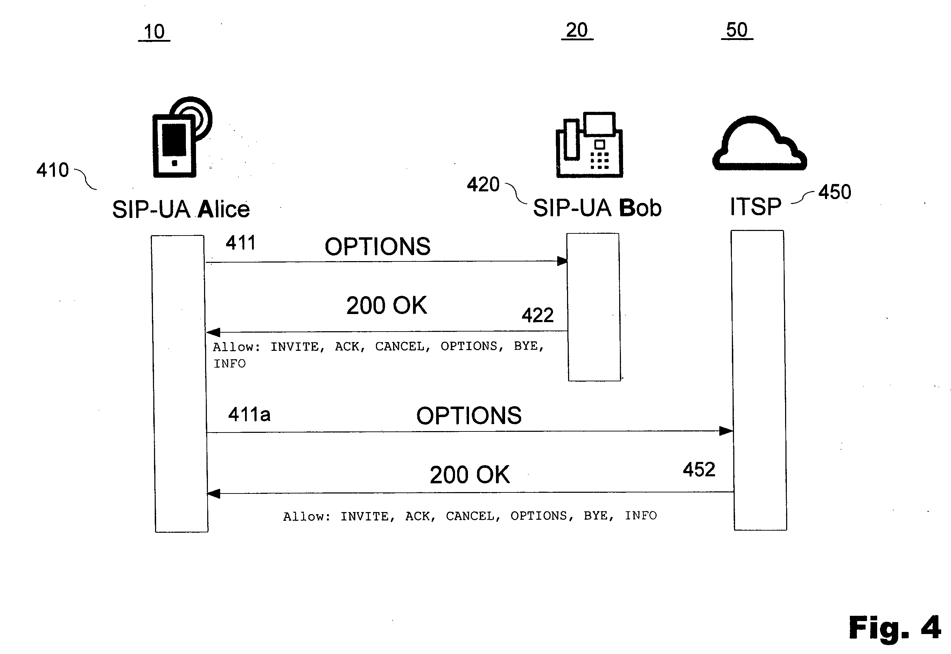

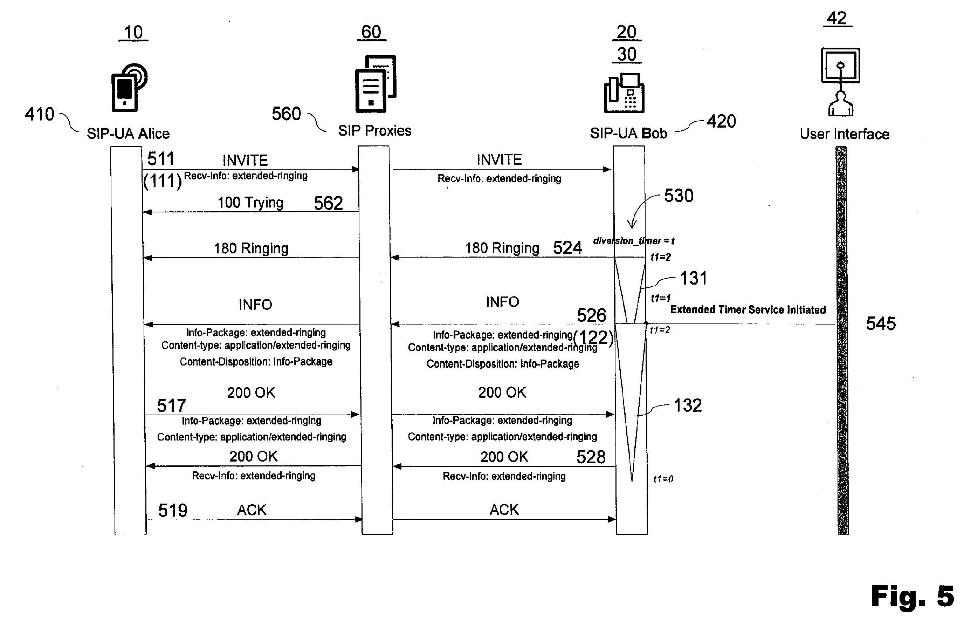

Figs. 4 and 5 are message flow diagrams illustrating a method implemented by a specific exemplary embodiment of the invention. Herein, Fig. 4 is a message flow diagram illustrating a dialog implementing the OPTIONS SIP part to be executed beforehand, and Fig. 5 is a message flow diagram illustrating a dialog implementing the INFO SIP part following the OPTIONS SIP part illustrated in Fig. 4.

For ease of description, the calling party 10 is exemplified by a human being called "Alice", and the called party 20 is exemplified by a human being called "Bob". As shown in Fig. 4, a first SIP User agent (UA-A) 410 represents calling party 10 "Alice", a second SIP User agent (UA-B) 420 represents called party 20, and an ITSP 450 is optionally involved, representing a managing instance 50. In this example embodiment illustrated, Alice and Bob are assumed to use respective terminal devices such as terminal devices 200 or 300 shown in Figs. 2A, 2B, or 3. As shown in Fig. 4, UA-A 410 uses the OPTIONS SIP request method to query the server or another user agent about its capabilities and discover whether INFO support is available as depicted in the following embodiments. For further reference, see [RFC3261] which is included by reference in this application in its entirety.

In particular, implementation of the OPTIONS SIP request method involves an OPTIONS request message 411 sent by UA-A 410 to UA-B 420 and/or an OPTIONS request message 411a sent by UA-A 410 to ITSP 450. When UA-B 420 receives the OPTIONS request message 411 it replies with a 200 OK answer 422. Likewise, when ITSP 450 receives the OPTIONS request message 411 a it replies with a 200 OK answer 452.

Contents of the request 411 are exemplified in below Table 1:

**Table 1: SIP listing of OPTIONS request message 411**

| |
|---|
| OPTIONS sip:bob@anywhere.com SIP/2.0 |
| Via: SIP/2.0/UDP pc33.athens.com;branch=z9hG4bKhjhs8ass877 |
| Max-Forwards: 70 |
| To: <sip:bob@anywhere.com>; |
| From: Alice <sip:alice@athens.com>;tag=1928301774 |
| CSeq: 63104 OPTIONS |

Contents of the 200 OK answer 422 are exemplified in below Table 2:

**Table 2: SIP listing of 200 OK answer 422**

| |
|---|
| SIP/2.0 200 OK |
| Via: SIP/2.0/UDP pc33.athens.com;branch =z9hG4bKhjhs8ass877;received=192.0.2.4 |
| To: <bob@anywhere.com>;tag=93810874 |
| From: Alice <sip:alice@athens.com>;tag=1928301774 |
| Call-ID: a84b4c76e66710 |
| CSeq: 63104 OPTIONS |
| Contact: <sip:bob@anywhere.com> |
| Allow: INVITE, ACK, CANCEL, OPTIONS, BYE, INFO |
| Content-Type: application/sdp |

Throughout this description, respective contents of any exemplified SIP message will not be described in detail as long as their contents are obvious from the used standards known in the art. Note that any massage listed above and in the following of this description may include a lot of information elements which are prescribed by the implemented standard/recommendation and/or given by actual circumstances, like via paths, addresses, tag nos., etc., and are to be taken as mere examples not intended to limit the invention in any regard unless stated otherwise. Furthermore, any SIP message exemplified here and in the following may include further necessary or optional contents which are omitted in this disclosure for the sake of focusing to the crucial elements. In other words, omission if some content is omitted here which however is necessary or optional according to used SIP standards/recommendations this is just to simplify description but does not mean that the respective content must or should be missing, in a practical implementation. In the listings of this application, elements provided by the present invention are highlighted by underlining.

It will be noted ITSP 450 is an example of some logical instance 50 acting as a registrar or manager at Bob's side. The request message used in this embodiment may be sent to ITSP 450 instead of directly sending to UA-B 420. I.e., request message 411 a from Alice 410 to ITSP 450 is similar to request message 411 from Alice to Bob 420 except the recipient address is different. Likewise, 200 OK message 452 from ITSP 450 to Alice 410 is similar to 200 OK message 452 from Bob to Alice except the sender address (and vias) are different. ITSP 450 may or may not forward any message directed to Bob dependent on whether or not ITSP 450 has sufficient information to answer on behalf of Bob's UA-B 420.

The proposal assumes usage of the INFO request according to the recommendations of [RFC6086]. INFO request capabilities have been exchanged amongst the communicating parties by OPTIONS request method prior to the utilization of the feature as depicted in Fig. 4. The method covers both (1) Info Package usage but also (2) legacy INFO usage (for [RFC2976] backwards compatibility).

A new Info Package Name will be registered to the relevant IANA registry under "Session Initiation Protocol (SIP) Parameters": Info Packages, following the definitions of [RFC5226] (see http://www.iana.org/assignments/sip-parameters/sip-parameters.xhtml#sip-parameters-66, for further details). As soon as the Info Package Name service is opened for registration by IANA the name "extended-ringing" should be registered. If already registered, another unique name will be selected.

Fig. 5 is a message flow diagram depicting execution of Extended Ringing between SIP end points A and B including SIP signalling. The request is not depicted in Fig. 5 or the subsequent figures. OPTIONS related negotiation has already successfully taken place as shown in Fig. 4. INFO support is already negotiated. Fig. 5 depicts a calling side 10 represented by UA-A 410 as in Fig. 4, a called side 20 represented by UA-B 420 as in Fig. 4, a User interface 42 on the called side 20, and a SIP network logical instance 60 which is represented by a number of SIP proxies 560. In the drawing, only one SIP proxy stage is illustrated for simplification reasons. In a practical implementation, any message will pass one or more SIP proxies 560 and will eventually have one or more via addresses of the passed-through SIP proxies 560 and/or other network resources added, without however altering further contents of the message. This addition of via paths will apply to any message transmitted via a SIP network.

As shown in Fig. 5, UA-A 410 initiates a SIP INVITE request message 511 to UA-B 420. In the (call initiating) INVITE request message 511 UA-A 410 indicates that it is willing to receive SIP INFO requests for Info Package "extended-ringing". It will be note that INVITE request 511 is an exemplification of call initiating message 111 shown in the principle diagram of Fig. 1. Contents of the INVITE request message 511 are exemplified in below Table 3:

**Table 3: SIP listing of SIP INVITE request message 511**

| |
|---|
| INVITE sip:bob@anywhere.com SIP/2.0 |
| Via: SIP/2.0/UDP pc33.athens.com;branch=z9hG4bKhjhs8ass877 |
| Max-Forwards: 70 |
| To: <sip:bob@anywhere.com>; |
| From: Alice <sip:alice@athens.com>;tag=1928301774 |
| Call-ID: a84b4c76e66710 |
| CSeq: 314159 INVITE |
| Contact: <sip:alice@athens.com> |

As generally known in the art, while forwarding INVITE request message 511, SIP proxies 550 return a 100 Trying message 562 to UA-A 410. In this context, UA-B 420 sends a 200 (OK) response back to UA-A 410, also indicating in this case that it is willing to receive INFO requests for Info packages. For reference, contents of this 200 OK response are exemplified in below Table 4:

**Table 4: SIP listing of 200 OK response message**

| |
|---|
| SIP/2.0 200 OK |
| Via: SIP/2.0/UDP pc33.athens.com;branch |
| =z9hG4bKhjhs8ass877;received=192.0.2.4 |
| To: <bob@anywhere.com>;tag=93810874 |
| From: Alice <sip:alice@athens.com>;tag=1928301774 |
| Call-ID: a84b4c76e66710 |
| CSeq: 314159 INVITE |
| Contact: <sip:bob@anywhere.com> |
| Recv-Info: extended-ringing |

As furthermore generally known in the art, when UA-B 420 receives INVITE request message 511 (111), it returns a 180 Ringing message 524 and starts a diversion timer 530 to run. It will be noted that diversion timer 530 is an exemplification of ringing timer 30 shown in Fig. 1. In other words, in this exemplary embodiment, the ringing timer instance 30 is implemented at the called party's (20) side. As shown in Fig. 5, the diversion timer 530 is set to an initial value which is indicated as t1=2, where t1 denotes a ringing time of diversion timer 530, and, for simplification reasons, a value 2 denotes the timer starting, a value of 1 denotes the timer running, and a value of 0 denotes the timer having run out. I.e., an initial timer 131 in the sense of the principle embodiment shown in Fig. 1 is started.

Extended ringing service is initiated by application interface 42 which refreshes the ringing timer instance 30 controlling the call management flow (e.g. diversion timer) on UA-B 420 to retain the call dialog in the ringing state. More specifically, as Bob chooses to initiate an Extended Timer Service by setting a command 545 via user interface 42, a new timer 132 is started to run, i.e., diversion timer 530 is set to t1=2 again, and an INFO request message 526 is sent to UA-A 410. Thereupon, UA-A 410 sends a 200 OK response 517 to Bob including an Info-Package approving extended ringing.

Contents of the INFO request 526 are exemplified in below Table 5:

**Table 5: SIP listing of INFO request message 526**

| |
|---|
| INFO sip:alice@athens.com SIP/2.0 |
| Via: SIP/2.0/UDP pc33.athens.com;branch=z9hG4bKhjhs8ass877 |
| Max-Forwards: 70 |
| To: <sip:alice@athens.com> |
| From: Bob <sip:bob@anywhere.com>;tag=1928301774 |
| Call-ID: a89b4c76e66710 |
| CSeq: 314400 INFO |
| Contact: <sip:bob@anywhere.com> |
| Info-Packaae: extended-ringing |
| Content-type: application/extended-ringing |
| Content-Disposition: Info-Package |

Listing of 200 OK response 517 is omitted as it's contents will be easily be understood from the above by a person skilled in the field.

Before the refreshed diversion timer t1 (132) runs out, user Bob is in position to answer the call and thus a 200 (OK) response 528 is sent over to Alice's UA-A 410 which in turn acknowledes accordingly with an ACK message 519 which is generally known in the art per se.

Within the context of a call session, extended timer service can be triggered multiple times by the user, with the "extended ringing" message transported to the other party via a new INFO request message 526. This is an optional service and a service provider can decide how many times this service can be repeated.

It will be noted that values 0, 1, and 2 of each timer, are just status markers indicating a starting, running, or run out state of each timer, and are not to be confused with actual time intervals (timeout intervals) of each timer which would be given in seconds, or interrupt cycles, or the like. An initial timeout interval may be identical or different from a reset timeout interval, wherein the reset timeout interval may be preset (default) and/or user-selectable.

### <ITSP subscriber solution>

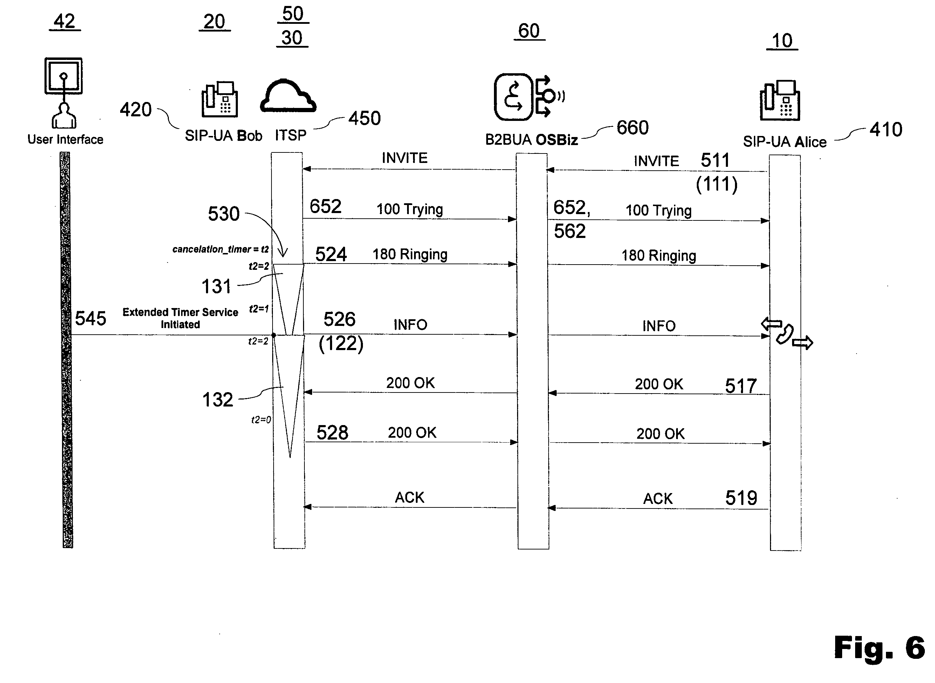

In Fig. 6, usage of the extended ringing service triggered via an ITSP subscriber 450 in ringing state according to a further specific exemplary embodiment of the present invention is shown.

Given that the service is supported by the SIP provider it should upon triggering by the user-controlled application refresh any cancelation (or diversion) timer 630 running on the provider side (e.g. t2). The process of SIP signalling extended ringing between ITSP 450 and SIP end point may be implemented, e.g., over OpenScape Business (OSBiz). Hence, further in addition to Fig. 5, Fig. 6 provides a B2BUA OSBiz 660 as part of a SIP network instance 60.

The process of this exemplary embodiment is similar to that of Fig. 5 so that features identical with those already described will not be described again. In addition to the process of the previous exemplary embodiment, ITSP 450 provides an own 100 Trying message 652 which is transported via the SIP network, in addition to 100 Trying messages 562 generated by network instances 60 themselves (proxies 550 as in Fig. 5, B2BUA 660). It will be noted that 100 Trying message 652 of ITSP 450 may be absorbed in B2BOA 660 instead of forwarded to UA-A 410, or may be nested in 100 Trying message 562 of B2BOA 660. As mentioned ringing timer instance 30 is implemented as a cancellation timer 630, in this specific example, which however does not change the implementations of the inventive features of the present invention.

Depending on the capabilities of the receiving end point or B2BUA 660, the following functions can be triggered:
- SIP-UA A 410 receives an optical notification not to hang-up (1);
- If a B2BUA 660 like OpenScape Business (OSBiz) governs the signalling, an announcement message could be provided to the end user, informing about the status (2);
- Alice device could generate a local tone to signal the ringing extension.

### <Transaction failure>

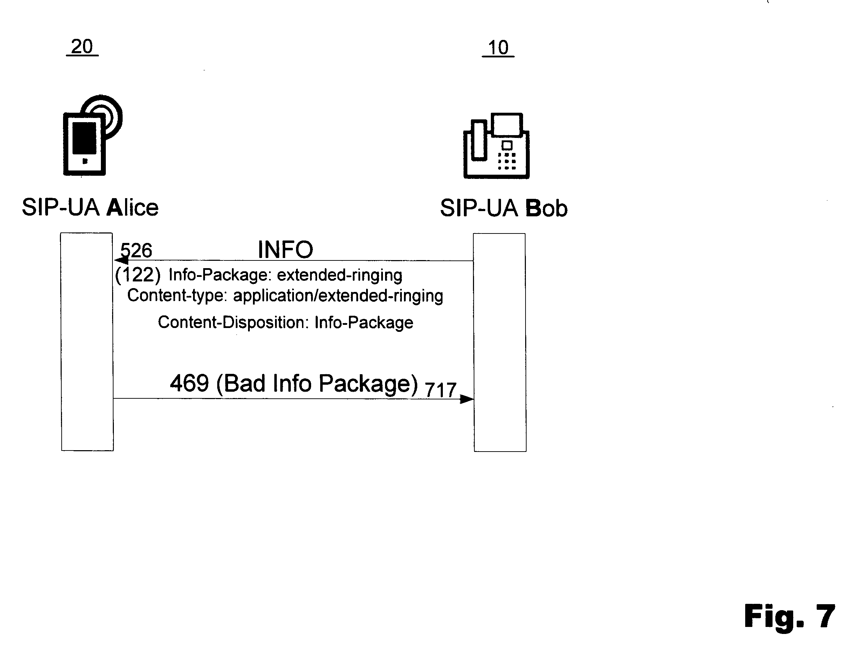

Fig. 7 shows a case if a transaction fails. If a SIP-UA receives a 469 (Bad Info Package) response 717 to an INFO request 526, the response represents a Transaction only failure and thus there should have no impact on the invite dialog usage. It denotes an unsupported Info Package thus there is no application level implementation that can use the offered information. In Fig. 7, unlike other appearances in this application, Alice assumes the role of the called party while Bob assumes the role of the calling party.

It will be noted that transport of INFO message {extended-ringing} 526 to the A party is done for information reasons only. I.e., extended ringing may also work properly when Alice is not informed of its use. It is however advantageous that Alice is informed so as to make her not lose patience and reject the call.

### <GSM signalling>

An integration of the present invention into a cellular telephony environment will now be described.

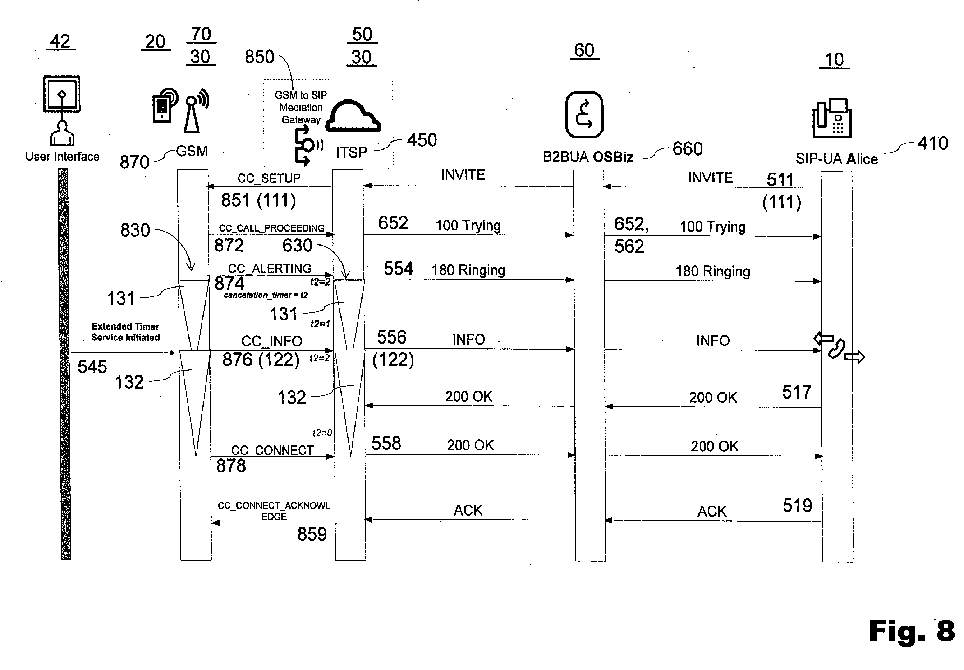

Fig. 8 is a message flow diagram depicting an implementation of the inventive method to a case where the called party 20 is using a cellular phone or smartphone such as device 200 shown in Fign. 2A, 2B, according to a further specific exemplary embodiment of the invention.

As shown in Fig. 8, a cellular network instance 70 is assigned to called user 20 (Bob). Cellular networking per se is known in the art so that its basic functionality and equipment is not described at this end. Here, cellular network instance 70 is represented by a GSM service 870 which may comprise one or more switching points, at least a base station of a cell where Bob's cellphone is positioned, and so on. GSM service 870 receives TDM signalling from Bob's ITSP 450. For this purpose, ITSP 450 is equipped with a GSM to SIP Mediation Gateway 850 which premises controlling the switching functions in communication protocol level, and enables the ITSP 450 to communicate contents between SIP network instances 60 such as B2BUA 660 or SIP proxies (560 in Fig. 5), on one side, and TDM enabled instances such as GSM service 870, on the other side.

Apparently, messaging between ITSP 450, B2BUA 660, and UA-A 410 is similar to that of the previous exemplary embodiment so that repeated description is omitted. It will be noted that User command 545 to initiate extended timer service is forwarded by Bob's terminal device to GSM service 870 where it will be further processed. In the following, the differences and specific signalling between GSM service 870 and ITSP 450 (Gateway 850) are particularly described.

As shown in Fig. 8, Gateway 850 translates SIP INVITE request message 511 into a GSM CC-SETUP signal 851 which may also be understood to represent a call initiation message 111 in the sense of the general concept shown in Fig. 1, and sends this to GSM service 870. A GSM CC_CALL_PROCEEDING signal 872 and a GSM CC_ALERTING signal 874 generated by GSM service 870 in response to the CC-SETUP signal are translated into SIP 100 Trying message 652 and SIP 180 Ringing message 524 by Gateway 850. In addition to cancelation timer 630 in ITSP 450, a GSM timer 830 is started by GSM service 870, which GSM timer 830 is a further ringing timer instance 30 in the sense of the general concept shown in Fig. 1. Upon setting Extended Timer Service Initiation command 545 by User Interface 42 which is submitted to GSM service 870, GSM timer 830 is restarted, and a GSM CC_INFO signal is sent to ITSP 450 which first restarts its own cancelation timer 630 as described above, and second generates SIP INFO message 526. As the user (Bob) accepts the call, GSM service 870 generates a GSM CC_CONNECT signal 878 to ITSP 450, and Gateway 850 translates the same into SIP 200 OK message 528. As the called party 20 accepts the call, GSM service 780 generates a GSM CC-CONNECT signal 878 which is translaged by Gateway 850 into SIP 200 OK message 528, and the caller's SIP ACK message 519 is translated into a GSM CC_CONNECT_ACKNOWLEDGE signal 859.

It will be noted that in this specific exemplary embodiment Alice's SIP 200 OK message 517 sent upon receipt of SIP INFO request message 526 will not be forwarded to the GSM side but just absorbed in ITSP 450. However, in a modification of this embodiment, Alice's SIP 200 OK message 517 may be translated into a suitable GSM signal for verifying to the caller 20 that ringing timer extension has been accepted at the called side.

It will be apparent that implementation in GSM is only an example of a cellular embodiment. The above concept likewise applies to a GPRS, UTMS, HSPA or other cellular standard.

### <TDM signalling>

Application of the present invention to TDM signalling telephony will now be described. TDM signalling will have to be enhanced in order to support this functionality for support in TDM trunking. As will be seen, internal signalling and external signalling will have to be handled differently.

### <External signalling>

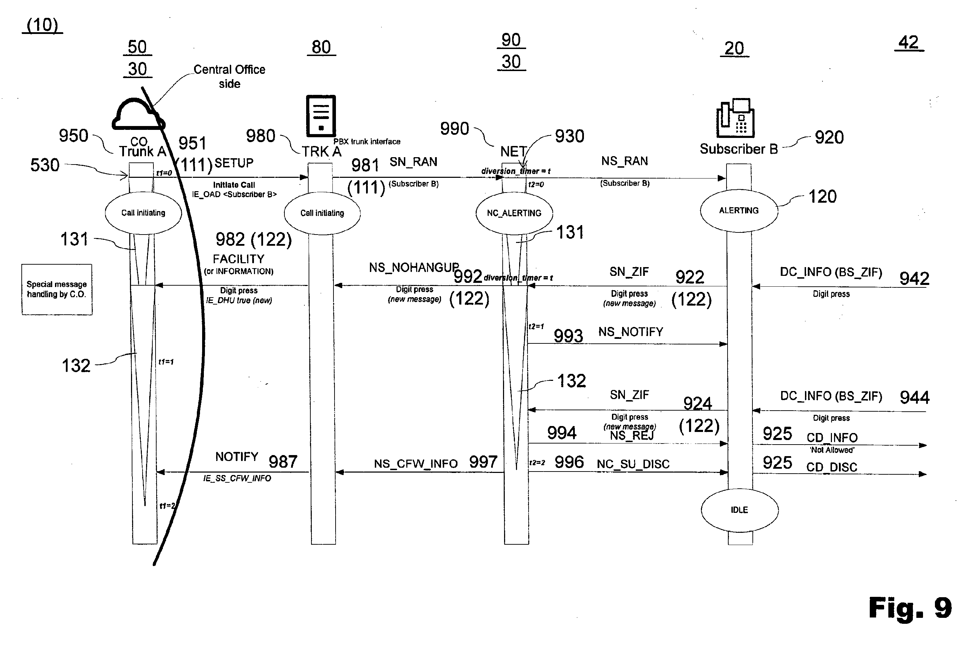

Fig. 9 is a message flow diagram depicting an implementation of the inventive method to TDM signalling in case of external incoming call, according to a further specific exemplary embodiment of the present invention.

In Fig. 9, the calling party A is not explicitly shown. A central office (CO) 50 serving as a service provider instance 50 is connected to a telephony network to which also calling party A is connected. Provider instance 50 establishes a CO trunk A 950 managing a call from calling party A. Within an internal network which Subscriber B belongs to, a PBX trunk interface 80 and a NETwork instance 90 are provided. PBX trunk interface 80 establishes a Trunk TRK A 980 representing a channel for exchanging data with CO Trunk A 950, and NETwork instance 90 is represented by a NETwork component 990. Any signalling between Caller A (not shown) and Subscriber B 920 runs via CO Trunk A 950, PBX TRK A 980, and NETwork component 990. Subscriber B 920 represents a called party 20 in the sense of the present invention.

As shown in Fig. 9 there is a great difference between internal signalling and external one. In this embodiment, a SN_ZIF message resets the timer so that the call is not forwarded after the predefined number of ring cycles. However there is another timer that has to be reset in this point and this is the release trunk timeout which is set inside the Central Office's signal processing. The mechanism that resets the timer inside Central Office PBX will be invoked by Facility or a Information message with a new information element introduced IE_DHU (Don't Hang Up) or IE_NOHANGUP or the like which takes the value 1 or 0. In addition this message can be used for other purposes from C.O. (like update caller's display).

Implementation of the method of this exemplary embodiment will be described below in more detail.

As soon as Provider instance (CO) 50 receives a call from user A directed to Subscriber B 920, provider instance 50 establishes CO Trunk A 950 in a call initiating state, resets a release trunk timer 530 (t1=0, initial timer 131) which is beginning to run, and sends a TDM SETUP signal 951 to PBX 80 which in turn establishes PBX TRK A 980 in a call initiating state, and sends a TDM SN_RAN signal 981 to NETwork component 990. Here, a diversion timer 930 is reset (t2=0, initial timer 131), and a TDM NS_RAN signal 991 is created and sent to Subscriber B 920 which thereupon is set in an alerting state (120).

As soon as the called party 20 decides to initiate ringing time extension by pressing a digit on his or her terminal device (not shown) which digit press generates a TDM DC_INFO (BS_ZIF) signal 942. Then, subscriber B 920 sends a TDM SN_ZIF signal 922 to NETwork component 990. Here, diversion timer 930 is reset again (t2=0, new timer 132), a TDM NS_NOHANGUP signal 992 is created and sent to PBX TRK A 980 which in turn sends a TDM FACILITY (or INFORMATION) signal 982 to CO Trunk A 950. Here, release trunk timer 530 is reset again (new timer 132). Furthermore, upon receipt of TDM SN_ZIF signal 922, NETwork component 990 returns a TDM NS_NOTIFY signal 993 to subscriber B 920.

In this exemplary embodiment, it is assumed that within the new timer 132 is running, the called party 20 again decides to initiate ringing time extension by pressing a digit on his or her terminal device (not shown) which digit press generates a new TDM DC_INFO (BS_ZIF) signal 944. Again, subscriber B 920, sends a new TDM SN_ZIF signal 924 to NETwork component 990. Now, however, NETwork component 990 rejects a second initiation of ringing time extension and thus sends a TDM NS_REJ signal 995 to Subscriber B 920 which in turn informs the user B by a TDM CD_INFO signal 925 that further extension of ringing time is not allowed.

As soon as diversion timer 930 runs out, NETwork component 990 sends a TDM NC_SU_DISC signal 996 to Subscriber B 920 which in turn informs the user B by a TDM CD_DISC signal 926 that the alerting state is ended, and is set to an idle state. Additionally, when diversion timer 930 runs out, NETwork component 990 sends a TDM NS_CFW_INFO signal 997 to PBX TRK A 980 which in turn sends a TDM NOTIFY signal 987 to CO Trunk A 950. Here, communication with a caller side is closed.

Below Table 6 includes explanations of TDM signals used in this exemplary embodiment:

**Table 6: Internal signalling abbreviations with ISDN term matching**

| | |
|---|---|
| SN_RAN | Subscriber to network call initiation request |
| NET | Network Connection |
| DC_INFO | Device to Call processing digit press |
| SN_ZIF | Subscriber to network digit press information |
| NS_NOHANGUP | Network to subscriber do-not-hangup signal (NEW MESSAGE) |
| NS_NOTIFY | Network to subscriber NOTIFY message |
| NS_ZIF | Network to subscriber digit press information |
| CD_DISC | Call processing to device disconnection request |
| DC_DISC | Device to call processing disconnection request |
| NC_SU_DISC | Network to Call processing disconnection request |
| NS_CFW_INFO | Network to Subscriber Call forwarding information for CO (external subscriber) |
| NS_REJ | Network to Subscriber rejection message |
| NS_RAN | Network to Subscriber call initiation request. |
| IDLE | State that indicates the apparatus is available for a call. |

Below Table 7 shows a format of the IE_DHU (or NS_NOHANGUP) information element.

**Table 7: New facility information element for DHU functionality**

| 8 | 7 | 6 | 5 | 4 | 3 | 2 | 1 |
|---|---|---|---|---|---|---|---|
| 1 | 0 | 1 | 0 0 0 0 1 | | | | |
| class | | form | Invoke component tag | | | | |
| Length format | Length of Invoke component | | | | | | |
| 0 | 0 | 0 | 0 0 0 0 1 | | | | |
| class | | form | Invoke identifier tag | | | | |
| Length format | Length of Invoke identifier | | | | | | |
| Invoke identifier | | | | | | | |
| 0 0 | | 0 | 0 0 0 1 0 | | | | |
| class | | form | Operation value tag | | | | |
| Length | 0 0 0 0 0 1 | | | | | | |
| format | Length of operation value | | | | | | |
| Operation Value | | | | | | | |
| Operation-specific value | | | | | | | |
| Class | | 0 | 0 0 0 0 1 | | | | |
| 1 | 0 | form | Service Tag | | | | |
| Length format | Service: DHU | | | | | | |
| | Ex: 00111 | | | | | | |
| 0 Length of preferred option | 00001 | | | | | | |
| 1 (i.e. true) | | | | | | | |

It will be recognized that both timers have to be updated in the case that a user decides to activate extended ringing. In this examplary embodiment, it is assumed that both timers 30 run upwards from 0 (start) to 2 (termination value). If a timer is reset, it assumes the value 0 again. Below Table 8 includes timer values and their individual meaning:

**Table 8: Timer values**

| | |
|---|---|
| t1=1 | the time when CO decides to release or divert the call |
| t1=2 | the updated time when CO decides to release or divert the call |
| t2=1 | the time when PBX decides to release or divert the call |
| t2=2 | the updated time when PBX decides to release or divert the call |

It will be noted that values 0, 1, and 2 of each timer, however, are just status markers indicating a starting, running, or run out state of each timer, and are not to be confused with actual time intervals (timeout intervals) of each timer which would be given in seconds, or interrupt cycles, or the like. An initial timeout interval may be identical or different from a reset timeout interval, wherein the reset timeout interval may be preset (default) and/or user-selectable.

### <Internal signalling>

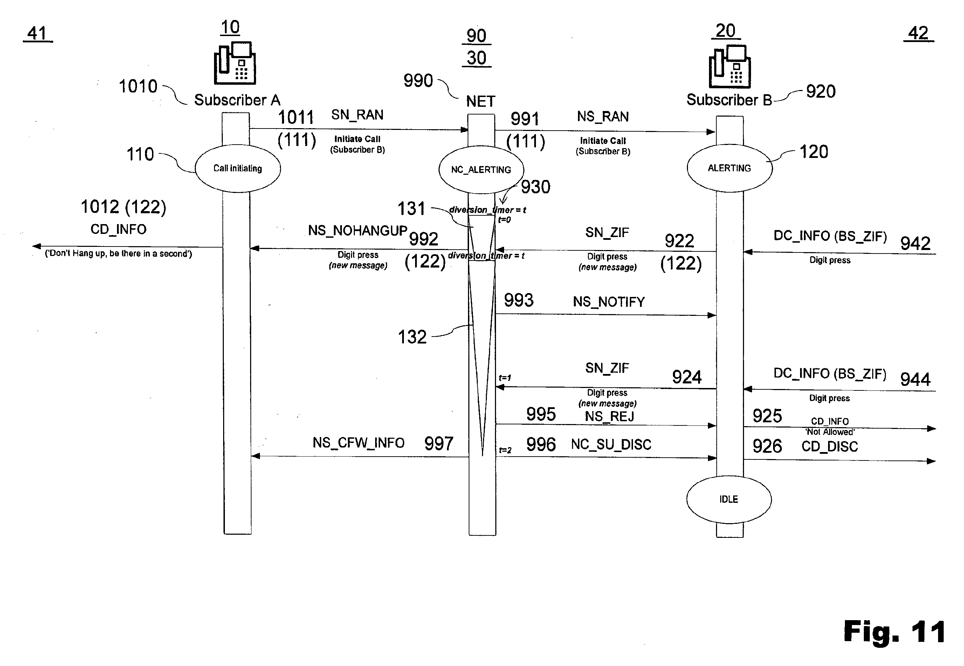

Figs. 10, 11 are message flow diagrams depicting an implementation of the inventive method to TDM signalling in case of internal incoming call, according to a further specific exemplary embodiment of the present invention. In this exemplary embodiment, the mechanism of extended ringing activation is assumed to function in a PBX system like OpenScape Business. Fig. 10 shows a general case where the called party 20 extends ringing one time only while Fig. 11 shows a case where the called party 20 tries to extend ringing twice.

In this exemplary embodiment, a subscriber A 1010 and subscriber B 920 are present within a private network, and are supposed to be handled internally by system's processing. A service provider like a central office (50 in Fig. 9) may be present for managing external calls but is not shown in Fig. 10. An exchange like a PBX (80 in Fig. 9) may be present but is not shown in Fig. 10 for ease of illustration. NETwork component 990 may be represented by or included in a PBX. Subscriber A 1010 represents a calling party 10, and subscriber B 920 represents a called party 20.

Signalling is similar with that of Fig. 9 so that identical instances and signals are not repeatedly described here. The differences from the previous embodiment are as follows. For initiating a call, Subscriber 1010 sends to NETwork component 990 a TDM SN_RAN signal 1011 which corresponds to SN_RAN signal 981 of the previous embodiment shown in Fig. 9 (sent by PBX TRK A 980 in Fig. 9). Upon receipt of TDM NS_NOHANGUP signal 992, instead of TDM FACILITY signal 982 of the previous embodiment shown in Fig. 9, subscriber A 1010 generates a TDM CD_INFO signal 1012 to show up at it's user interface 41 to inform a user not to hang up as subscriber B 920 will be there soon. Furthermore, TDM NS_CFW_INFO signal 997 of NETwork component 990 is directly received by Subscriber A 1010.

Now, the functionality of the method of the present exemplary embodiment is described in further detail. Subscriber A 1010 calls subscriber B 920. Subscriber B 920 starts ringing while NETwork component 990 is responsible for maintaining diversion timer 930 which if it expires a call forwarding list is followed. Now if subscriber B 920 presses a predefined digit 944 (while in ringing state) at his or her terminal device, this information is propagated along the way to NETwork component 990 which performs two basic actions:
- Resets the diversion timer 930 to its initial value t = 0 (hence timeout period is extended), and
- Informs subscriber A 1010 with a message NS_NOHANGUP 992 on his or her display notifying 'Don't hang up, be there in a second'

Now since the Call forwarding window is extended subscriber B 920 has the opportunity to pickup the call after t=1. If however user does not take the call and t=2 is reached then the call is forwarded to the next entity in the Call Destination List which includes a third party when the call is redirected..

In the case shown in Fig. 11, subscriber B 920 tries to extend the timer instance 30 for a second time. This however is not allowed since feature's use case specifies that subscriber B 920 will pick up the handset in short term.

In the latter case subscriber B 920 will be notified that this action is not allowed. It is apparent that NETwork component 990 has to hold the information of how many times a called station used that feature. Hence in case subscriber B 920 decides to extended again timeout (SN_ZIF), a reject message NS_REJ 995 will be sent back notifying him or her with a message: 'Not allowed'.

The rejection of the second or third time activation is up to the Service Provider or PBX and it can be configurable. The timer instance 30 could theoretically be updated infinitely.

This patent application introduces the on ringing signalling concept in telephony and breaks it down to VoIP and digital technology. As far as concerned the latter it introduces new ISDN message Information Element (IE) or alternatively the usage of existing User-to-User signalling. On ringing signalling can be significantly useful for the use cases described above but on top of that it could be used for other applications also.

The invention is generally applicable to any fields of communication.

Obviously, various applications of the present invention may become apparent to the person skilled in the art, based on the information disclosed in the present specification, which might not be mentioned explicitly but are fully covered by the scope of the present application.

It is to be noted that analogue signalling is not explicitly described in the examples and embodiments of the present invention. There might be constraints as to transmit in-band signalling while ringing current is present on a called party's side, which would have to be further researched. However, this does not exclude the principle of the present invention to be applicable in an analogue telephoning environment.

A technical feature or several technical features which has/have been disclosed with respect to a single or several embodiments disclosed herein before may be present also in another embodiment, except it is/they are specified not to be present or it is impossible for it/them to be present for technical reasons. For example, while some embodiments provide an ITSP or other managing instance on the called party's side, any party in any messaging or signalling in this application may be assigned some managing instance such as an ITSP.

In the sense of the present invention, a party (i.e., calling party, called party) may be understood to be a logical instance, or as a human being, a terminal device, a user interface, a user agent, a provider instance, a network instance, etc., which sets, receives, or forwards a call or respective messages or signals in the context of the call. In particular, instances between the respective endpoints of communication may assume both roles of calling and called parties, depending on the direction of messaging or signalling. More practically speaking, an intermediate logical or physical instance may occur as a calling party, for an instance in the direction of a called endpoint or the called endpoint itself, and may at the same time occur as a called party, for an instance in the direction of a calling endpoint or the calling endpoint itself.

## Claims

1. Method for managing a telephone call, comprising steps of:
- recognizing a call request (111) of a calling party (10) to establish a call with a called party (20), and
- extending a timeout being a time period between recognizing the call request (111) and automatically rejecting the call by the called party (20), before the call is established or rejected.

2. The method of claim 1, wherein the step of extending the timeout comprises:
- a step of setting a ringing timer (30) to a timeout initial value upon recognizing said call request (111), said timeout initial value defining a ringing time before said call request is automatically rejected, and
- a step of resetting said ringing timer (30) to a timeout reset value, before said ringing timer (30) runs out.

3. The method of claim 2, wherein said timeout reset value is identical with said timeout initial value, or is different from said timeout initial value, preferably definable by said called party (20) beforehand and/or upon receiving said call request (111).

4. The method of any of the preceding claims, further comprising a step of receiving a demand (545; 942, 944) from said called party (20) to execute the step of extending said timeout, said step of extending said timeout being executed upon receipt of said demand (545; 942, 944).

5. The method of any of the preceding claims, further comprising a step of notifying said called party (20) that said time period is up to end.

6. The method of any of the preceding claims, wherein said step of extending said timeout is automatically executed before said time period ends.

7. The method of any of the preceding claims, further comprising a step of notifying said calling party (10) and/or said called party (20) that said timeout has been extended, preferably including a step of providing a message to a terminal device of the calling party (10), to allow the called party (20) to accept the call request (111) during the extended timeout.

8. The method of any of the preceding claims, wherein the method is implemented either by using a SIP standard, preferably utilizing an INFO SIP request method for establishing and/or notifying timeout extension at and to the calling party (10) or an intermediate instance (60), respectively, or with a TDM signalling standard, wherein any request, notification and the like is accomplished by TDM encoded messages.

9. Telecommunication device, being adapted to execute the method of any of the preceding claims.

10. The telecommunication device of claim 9, wherein said telecommunication device is either an instance within a telecommunication system, said instance being arranged between said calling party (10) and said called party (20), or a terminal device (200; 300) usable by the called party (20).

11. The telecommunication device of claim 10, wherein said telecommunication device comprises a trigger element such as a button, key (347), switch, designated area (219a) on a touch panel (210), adapted for demanding or initiating execution of said step of extending said timeout.

12. The telecommunication device of any of claims 9 to 11, wherein said telecommunication device is adapted to run a ringing timer (30) upon an outgoing and/or incoming and/or forwarded call request (111).

13. Telecommunication system, comprising apparatus means for:
- recognizing a call request (111) of a calling party (10) to establish a call with a called party (20), and
- extending a timeout being a time period between recognizing the call request and automatically rejecting the call by the called party (20), before the call is established or rejected,
wherein said telecommunication system is preferably adapted to execute the method of any of claims 1 to 8.

14. The telecommunication system of claim 13, wherein the steps of the method are distributed to at least two instances of said telecommunication system, said instances including:
- at least one terminal device (200; 300) which is adapted to provide a demand (545; 942, 944) for execution of said timeout extension step, and
- at least one instance which is adapted to run a ringing timer (30) and to accept said demand (545; 942, 944) and to execute said timeout extension step.

15. Software product for managing a call, said software product being stored on computer-readable medium, preferably being directly loadable into an internal memory of a computer, and comprising program code for performing the steps of a method of any of claims 1-8 when said software product is executed by said computer, said computer preferably comprising or being embodied by or included in a telephone (300), mobile phone, smart phone (200), PDA, server, preferably telephone server, exchange, gateway, ITSP, desktop computer, portable computer, tablet, or the like.
